Europäisches Patentamt

European Patent Office

Office européen des brevets

(19)

(11) EP 1 136 442 A2

(12) EUROPÄISCHE PATENTANMELDUNG

(43) Veröffentlichungstag:
   26.09.2001  Patentblatt 2001/39

(51) Int Cl.⁷: **C01B 3/16**, B01J 23/89,
   B01J 35/04

(21) Anmeldenummer: 01106783.2

(22) Anmeldetag: 17.03.2001

(84) Benannte Vertragsstaaten:
   **AT BE CH CY DE DK ES FI FR GB GR IE IT LI LU
   MC NL PT SE TR**
   Benannte Erstreckungsstaaten:
   **AL LT LV MK RO SI**

(30) Priorität: **21.03.2000  DE 10013894**

(71) Anmelder: **dmc2 Degussa Metals Catalysts
   Cerdec AG
   60287 Frankfurt am Main (DE)**

(72) Erfinder:
   • **Baumann, Frank Dr.
     63755 Alzenau (DE)**
   • **Wieland, Stefan Dr.
     63069 Offenbach (DE)**

(54) **Verfahren zur katalytischen Umsetzung von Kohlenmonoxid in einem Wasserstoff
enthaltenden Gasgemisch mit verbessertem Kaltstartverhalten und Katalysator hierfür**

(57)   Die Erfindung betrifft ein Verfahren zur Umsetzung von Kohlenmonoxid in einem Wasserstoff und weitere, oxidierbare Bestandteile enthaltenden Gasgemisch mit Wasser zu Kohlendioxid und Wasserstoff an einem Katalysator. Als Katalysator wird ein oxidationsaktiver Edelmetall-Shift-Katalysator vorgeschlagen. Die erforderliche Arbeitstemperatur des Katalysators wird durch teilweise Oxidation der oxidierbaren Bestandteile des Gasgemisches eingestellt und gegebenenfalls aufrecht erhalten.

## Beschreibung

Die Erfindung betrifft ein Verfahren zur katalytischen Umsetzung von Kohlenmonoxid in einem Wasserstoff und weitere, oxidierbare Bestandteile enthaltenden Gasgemisch mit Wasser zu Kohlendioxid und Wasserstoff sowie einen hierfür geeigneten Katalysator.

Die Umsetzung von Kohlenmonoxid mit Wasser zu Kohlendioxid und Wasserstoff in Gegenwart von Katalysatoren ist ein bekanntes Verfahren zur Herstellung von Wasserstoffreichen Gasmischungen, dem folgende exotherme Reaktion zugrunde liegt:

$$CO + H_2O \leftrightarrow H_2 + CO_2 \qquad \Delta H > 0 \qquad\qquad (1)$$

Dabei kann es zu den folgenden Nebenreaktionen kommen:

$$CO\text{-Methanisierung:} \qquad CO + 3\,H_2 \leftrightarrow CH_4 + H_2O \qquad \Delta H > 0 \qquad (2)$$

und

$$CO_2\text{-Methanisierung:} \qquad CO_2 + 4\,H_2 \leftrightarrow CH_4 + H_2O \qquad \Delta H > 0 \qquad (3)$$

Die Reaktion gemäß Reaktionsgleichung (1) wird im folgenden als Kohlenmonoxid-Konvertierung oder CO-Konvertierung bezeichnet. Im angelsächsischen Sprachgebrauch wird hierfür häufig der Begriff "water-gas-shift reaction" verwendet.

Die Herstellung von Wasserstoff reichen Gasmischungen aus Kohlenwasserstoffen, beziehungsweise Alkoholen, durch Dampfreformierung, partielle Oxidation oder autotherme Reformierung ist ein bekannter Prozeß. Diese Gasmischungen (Reformate) enthalten abhängig vom eingesetztem Verfahren 1 bis 40 Vol.-% Kohlenmonoxid.

Für den Einsatz des Reformates als Brennstoff in Brennstoffzellen ist es notwendig, das in ihm enthaltene Kohlenmonoxid so weit wie möglich zu vermindern, um die Vergiftung des Platin enthaltenden Anodenkatalysators der Brennstoffzellen bei der Oxidation des Wasserstoffs zu vermeiden. Darüber hinaus führt die Umsetzung des Kohlenmonoxids gemäß Reaktionsgleichung (1) zu einer Erhöhung des Wasserstoffgehaltes des Reformates und damit zu einer Verbesserung des Wirkungsgrades des Gesamtprozesses.

Aus Platz- und Gewichtsgründen werden für die Anwendung in Kraftfahrzeugen Katalysatoren für die Umsetzung des Kohlenmonoxids mit einer sehr hohen Aktivität und Selektivität benötigt. Die damit erzielbaren hohen Raum-Zeit-Ausbeuten gestatten es, das Volumen der benötigten Reaktoren klein zu halten.

Bekannte Katalysatoren für die Umsetzung von Kohlenmonoxid wurden überwiegend für stationäre, industrielle Anwendungen entwickelt. Die Schwerpunkte lagen auf der Produktion von reinem Wasserstoff, Ammoniak und anderen großtechnischen Produkten, die auf der Verwendung von Synthesegasmischungen ($CO/H_2$) basieren. Katalysatoren für die Umsetzung von Kohlenmonoxid gemäß Reaktionsgleichung (1) werden im folgenden auch als Shift-Katalysatoren bezeichnet.

Es handelt sich bei diesen bekannten Katalysatoren um Unedelmetalle enthaltende Vollkatalysatoren. Sie werden in zweistufigen Verfahren eingesetzt. In der ersten Verfahrensstufe wird bei Temperaturen zwischen 360 und 450° C eine sogenannte Hochtemperatur-CO-Konvertierung (high temperature water-gas-shift, HTS) an Fe/Cr-Katalysatoren durchgeführt. In der anschließenden zweiten Stufe wird bei Temperaturen zwischen 200 und 270° C eine Tieftemperatur-CO-Konvertierung (low temperature water-gas-shift, LTS) an Cu/ZnO-Katalysatoren vorgenommen. Hinter der Tieftemperatur-Verfahrensstufe werden entsprechend dem thermischen Gleichgewicht Kohlenmonoxid-Konzentrationen von weniger als 1 Vol.-% erhalten.

Die konventionellen Katalysatoren für die Umsetzung von Kohlenmonoxid besitzen entscheidende Nachteile:

Die beschriebene, zweistufige Verfahrensführung ist wegen der Eigenschaften dieser Katalysatoren notwendig. Während Cu/ZnO-haltige Katalysatoren oberhalb 270° C durch Rekristallisation, beziehungsweise Sinterung, des Kupfers deaktiviert werden, können die im Hochtemperaturbereich verwendeten Fe/Cr-haltigen Katalysatoren wegen mangelnder Aktivität nicht bei niedrigen Temperaturen eingesetzt werden. Wird der vorgegebene Temperaturbereich der Hochtemperatur-Katalysatoren überschritten, können Methanisierungsreaktionen (Reaktionsgleichungen (2) und (3)) eintreten, die die Selektivität des Hochtemperatur-Katalysators verringern und dadurch den Gesamtwirkungsgrad des Wasserstoff-Erzeugungssystems herabsetzen.

Sowohl bei den bekannten Hochtemperatur- als auch bei den Tieftemperatur-Katalysatoren handelt es sich um Schüttgutkatalysatoren, bei denen das Katalysatormaterial zu Pellets oder anderen Formkörpern verpresst ist. Sie bestehen demgemäß vollständig aus katalytisch aktiver Masse und werden auch als Vollkatalysatoren bezeichnet. Sie weisen in der Regel eine hohe Schüttdichte auf.

In den bekannten, industriellen Verfahren zur Umsetzung von Kohlenmonoxid an Katalysatoren nach Reaktionsgleichung (1) wird mit Raumgeschwindigkeiten des Gasgemisches zwischen 300 und 3000 h$^{-1}$ gearbeitet. Diese geringen Raumgeschwindigkeiten sind für eine Anwendung in Kraftfahrzeugen nicht ausreichend.

Hohe Schüttdichten und geringe Raumgeschwindigkeiten führen zu niedrigen, spezifischen Konvertierungsraten $R_{CO}$ für Kohlenmonoxid, worunter im Rahmen dieser Erfindung die umgesetzte Stoffmenge an Kohlenmonoxid $n_{CO}$ pro Masse $m_{Kat}$ des Katalysators und Reaktionsdauer $\Delta t$ verstanden wird. Die Masse des Katalysators wird hierbei in Gramm, die Reaktionsdauer in Sekunden und die Stoffmenge in Mol angegeben:

$$R_{CO} = \frac{n_{CO}}{m_{Kat} \cdot \Delta t} \qquad \left[ \frac{mol}{g \cdot s} \right] \qquad\qquad (4)$$

Die bekannten Cu/ZnO- und Fe/Cr-Katalysatoren müssen vor ihrem Einsatz durch Reduktion aktiviert werden. Die aktivierten Katalysatoren sind gegenüber Sauerstoff empfindlich. Bei Kontakt mit Luftsauerstoff werden sie wieder in exothermer Reaktion oxidiert und deaktiviert.

Im Vergleich zu den soeben beschriebenen, industriellen Hochtemperatur- und Tieftemperatur-Katalysatoren auf Fe/Cr- bzw. Cu/ZnO-Basis sind edelmetallhaltige Katalysatoren für diese Anwendungen bisher hauptsächlich aus der wissenschaftlichen Literatur bekannt.

D.C. Grenoble et al. beschreiben in "The Chemistry and Catalysis of the Water Gas Shift Reaction. 1. The Kinetics over Supported Metal Catalysts", J. Catal. 67 (1980) 90-102, Pulver-Katalysatoren, die als aktive Komponente Cu, Re, Co, Ru, Ni, Pt, Os, Au, Fe, Pd, Rh oder Ir enthalten und die auf Aluminiumoxid ($Al_2O_3$) als Trägermaterial abgeschieden sind. Die kinetischen Untersuchungen ergaben für Kohlenmonoxid eine Reaktionsordnung von ca. 0,2 , für das eingesetzte Wasser eine Reaktionsordnung von ca. 0.5.

In "Methanisation and Water-Gas Shift Reactions over Pt/CeO$_2$", J. Catal. 96 (1985) 285-287, beobachten Steinberg et al. schlechte Selektivitäten im Hinblick auf den Umsatz von Kohlenmonoxid nach Reaktionsgleichung (1). Das Produktgasgemisch enthält dementsprechend hohe Anteile von Methan.

In "Water-gas shift conversion using a feed with a low steam to carbon monoxide ratio and containing sulphur", Catal. Today 30 (1996) 107-118, untersuchen J. Ross et al. neben Fe/Cr-, Cu/ZnO- und Co/Cr-Katalysatoren einen Pt/ZrO$_2$-Katalysator. Dieser Katalysator zeigt bei 320° C einen Kohlenmonoxid-Umsatz von 50%. Das Pt/ZrO$_2$-System zeigt in der Reihe der untersuchten Verbindungen die höchste Toleranz gegenüber schwefelhaltigen Verbindungen. Der Katalysator zeigt bei 300° C einen Umsatz von 25% und bei 350° C einen Umsatz von 70%. Dies entspricht einer spezifischen Konvertierungsrate für Kohlenmonoxid von $R_{CO}$ (300° C) = 7,00·10$^{-6}$ mol/($g_{cat}$·s) bzw. $R_{CO}$ (350° C) = 1,95·10$^{-5}$ mol/($g_{cat}$·s).

Die FR 2567866 A beschreibt einen Kupfer und/oder Palladium enthaltenden Katalysator auf einem Träger aus Spinell ZnAl$_2$O$_4$, der dadurch gewonnen wird, das der zu Partikeln mit Durchmessern zwischen 0,4 und 0,6 mm verformte Spinell mit Lösungen von Kupfer und/oder Palladium imprägniert und calciniert wird. Bei Drücken von 40 bar und einer Temperatur von 250° C wird bei einem sehr hohen Wasserüberschuß (H$_2$O/CO = 10) mit diesem Katalysator ein Umsatz von 86% erreicht.

Die in den wissenschaftlichen Veröffentlichungen untersuchten Pulverkatalysatoren sind für eine technische Anwendung nicht geeignet.

Die bekannten Vollkatalysatoren in Form von Tabletten, Kugeln oder unregelmäßig geformten Partikeln werden als sogenannte Schüttgut-Katalysatoren eingesetzt. Mit solchen Katalysatoren werden nur unbefriedigende Raum-Zeit-Ausbeuten erhalten. Außerdem sind die erzielbaren spezifischen Konvertierungsraten mit diesen Katalysatoren gering.

Es war daher Aufgabe der vorliegenden Erfindung, ein Verfahren für die Umsetzung von Kohlenmonoxid in einem Wasserstoff enthaltenden Gasgemisch anzugeben, welches unter den mobilen Einsatzbedingungen in Kraftfahrzeugen mit ihren sich schnell ändernden Leistungsanforderungen eine hohe, spezifische Konvertierungsrate für Kohlenmonoxid bei guter Selektivität ermöglicht, eine hohe Temperaturbeständigkeit aufweist und unempfindlich gegenüber Sauerstoff im Eduktgasgemisch ist. Insbesondere soll das Verfahren nach einem Kaltstart möglichst schnell seine Betriebsbereitschaft erreichen. Ein weiterer Gegenstand der Erfindung ist ein für das Verfahren geeigneter Katalysator.

Diese Aufgabe wird durch ein Verfahren zur katalytischen Umsetzung von Kohlenmonoxid in einem Wasserstoff enthaltenden Gasgemisch mit Wasser zu Kohlendioxid und Wasserstoff (Kohlenmonoxid-Konvertierung) gelöst, wobei das Gasgemisch weitere, oxidierbare Bestandteile enthalten kann. Zur Umsetzung des Kohlenmonoxids wird das Gasgemisch über einen Shift-Katalysator geleitet, der eine Arbeitstemperatur für die Kohlenmonoxid-Konvertierung besitzt. Das Verfahren ist dadurch gekennzeichnet, dass es sich bei dem Shift-Katalysator um einen oxidationsaktiven Shift-Katalysator auf der Basis von Edelmetallen handelt und die erforderliche Arbeitstemperatur des Katalysators durch teilweise Oxidation der oxidierbaren Bestandteile des Gasgemisches eingestellt und gegebenenfalls aufrecht erhalten wird.

Das vorgeschlagene Verfahren ist speziell für den mobilen Einsatz in mit Brennstoffzellen betriebenen Kraftfahrzeugen konzipiert, um das durch Dampfreformierung, partielle Oxidation oder autotherme Reformierung gewonnene, Wasserstoff reiche Gasgemisch (im folgenden auch als Reformatgas bezeichnet) in allen Betriebszuständen des Kraftfahrzeuges effektiv von Kohlenmonoxid zu reinigen. Das Gasgemisch kann abhängig von seiner Herstellung bis zu 40 Vol.-% Kohlenmonoxid enthalten.

Der mobile Einsatz des Verfahrens stellt hohe Anforderungen an seine Dynamik. So wird erwartet, dass schon wenige Sekunden nach dem Kaltstart die Brennstoffzelle des Fahrzeugs mit Wasserstoff versorgt werden kann. Dies bedeutet, dass die für das vorgeschlagene Verfahren verwendeten Katalysatoren in wenigen Sekunden auf ihre Arbeitstemperatur aufgeheizt werden müssen. Während des Betriebs des Kraftfahrzeugs werden die Katalysatoren mit sehr unterschiedlichen Raumgeschwindigkeiten belastet. Sie variieren zwischen einer niedrigen Raumgeschwindigkeit im Leerlauf des Kraftfahrzeugs und 100000 h$^{-1}$ bei Volllast. Im unteren Lastbereich kann es vorkommen, dass die Exothermie der Kohlenmonoxid-Konvertierung gemäß Gleichung (1) nicht ausreicht, um den Katalysator auf Arbeitstemperatur zu halten.

Das vorgeschlagene Verfahren löst diese Probleme durch katalytische Verbrennung eines variablen Teils der oxidierbaren Bestandteile des Gasgemisches, um so den Katalysator nach dem Kaltstart schnell auf seine Arbeitstemperatur für die Kohlenmonoxid-Konvertierung zu bringen oder ihn während des Betriebs auf dieser Temperatur zu halten. Für das Verfahren ist es deshalb wichtig, dass die verwendeten Katalysatoren in der Lage sind, die oxidierbaren Bestandteile des Gasgemisches teilweise zu oxidieren, ohne dadurch selbst deaktiviert zu werden. Dabei ist es wesentlich, dass die Anspringtemperatur des Katalysators für die Oxidationsreaktion niedriger als seine Arbeitstemperatur für die Kohlenmonoxid-Konvertierung ist.

Diese Anforderungen werden zum Beispiel von Katalysatoren erfüllt, die als katalytisch aktive Komponenten die Elemente der Platingruppenmetalle, also Platin, Palladium, Rhodium, Iridium, Ruthenium und Osmium, oder Gold auf einem oxidischen Trägermaterial aus der Gruppe Aluminiumoxid, Siliciumdioxid, Titanoxid, Seltenerdoxide oder Mischoxide hiervon oder Zeolithe enthalten. Ein Katalysator mit dieser Funktion wird im folgenden als oxidationsaktiver Katalysator bezeichnet. Um eine möglichst feine Verteilung der katalytisch aktiven Komponenten auf dem Trägermaterial zu ermöglichen, sollte das Trägermaterial wenigstens eine spezifische Oberfläche (BET-Oberfläche, gemessen nach DIN 66132) von mehr als 10 m$^2$/g aufweisen. Solche oxidationsaktiven Edelmetall-Katalysatoren weisen Anspringtemperaturen für die Oxidation von Kohlenmonoxid im Bereich zwischen 120 und 170° C auf

Oxidationsaktive Edelmetall-Katalysatoren weisen auch eine gewisse Shift-Aktivität auf, das heißt sie sind in der Lage, bei Vorliegen entsprechender Reaktionsbedingungen (Temperatur, Gaszusammensetzung) Kohlenmonoxid gemäß Reaktionsgleichung (1) mit Wasser zu Kohlendioxid und Wasserstoff umzusetzen. Ihre Shift-Aktivität und Selektivität kann durch Zusatz weiterer, katalytisch aktiver Komponenten, beziehungsweise Promotoren, verbessert werden. Hierzu gehören Elemente der Seltenerdmetalle, insbesondere Cer und Lanthan, sowie die Unedelmetalle der Nebengruppen des periodischen Systems der Elemente, besonders Eisen oder Kupfer. Diese Zusätze beeinträchtigen die Oxidationsaktivität des Katalysators nicht.

Die Shift-Aktivität und Selektivität kann darüber hinaus auch durch Dotieren des Trägermaterials mit redoxaktiven Oxiden der Metalle Cer, Zirkon, Titan, Vanadium, Mangan und Eisen in einer Menge von 1 bis 50 Gew.-%, bezogen auf das Gesamtgewicht des Trägermaterials, erhöht werden.

Ein bevorzugter Edelmetall-Shift-Katalysator für das erfindungsgemäße Verfahren enthält Platin und/oder Palladium gemeinsam mit Eisen oder Kupfer sowie Ceroxid auf einem feinteiligen Aluminiumoxid.

Der für die Oxidation benötigte Sauerstoff kann im Gasgemisch selbst enthalten sein oder dem Gasgemisch vor dem Kontakt mit dem Katalysator zudosiert werden. Im letzteren Fall wird der Sauerstoff in Abhängigkeit von den herrschenden Verfahrensparametern dem Gasgemisch zugefügt. Zu den relevanten Verfahrensparametern gehören Raumgeschwindigkeit, Druck, Kohlenmonoxid-Konzentration und Eingangstemperatur des Gasgemisches.

Das Verfahren arbeitet bei Raumgeschwindigkeiten des Gasgemisches von einer Leerlauf-Raumgeschwindigkeit bis zu einem Wert von 100000 h$^{-1}$ und bei einem Druck zwischen Atmosphärendruck und 10 bar. Es kann sowohl für die Niedertemperatur-CO-Konvertierung als auch für die Hochtemperatur-CO-Konvertierung eingesetzt werden.

Für die Niedertemperatur-CO-Konvertierung wird ein oxidationsaktiver Edelmetall-Shift-Katalysator mit einer Arbeitstemperatur zwischen 180 und 300° C eingesetzt. Die niedrige Arbeitstemperatur wird durch eine relativ hohe Beladung des Katalysators mit den katalytisch aktiven Edelmetallen erreicht. Bei der Niedertemperatur-CO-Konvertierung enthält das Reformatgas gewöhnlich 2 bis 15 Vol.-% Kohlenmonoxid und besitzt eine vom Reformierungsprozess herrührende Eingangstemperatur zwischen 100 und 250° C.

Für die Hochtemperatur-CO-Konvertierung wird ein oxidationsaktiver Edelmetall-Shift-Katalysator mit einer Arbeitstemperatur zwischen 280 und 550° C eingesetzt. Bei der Hochtemperatur-CO-Konvertierung enthält das Reformatgas gewöhnlich 2 bis 40 Vol.-% Kohlenmonoxid und besitzt eine vom Reformierungsprozess herrührende Eingangstemperatur zwischen 300 und 600° C.

Das Verfahren erlaubt auch die Hintereinanderschaltung einer Hochtemperatur-Konvertierungsstufe und einer Niedertemperatur-Konvertierungsstufe. Das Gasgemisch verlässt in diesem Fall die Hochtemperaturstufe mit einer Temperatur, die der Arbeitstemperatur des Katalysators der Hochtemperaturstufe entspricht und muss daher vor dem Kontakt mit dem Katalysator der Niedertemperaturstufe auf dessen Arbeitstemperatur abgekühlt werden.

Die vom Reformierungsprozess herrührende Temperatur des Reformatgases entspricht bei mittleren und hohen Leistungsanforderungen vom Kraftfahrzeug etwa der Arbeitstemperatur der jeweiligen Shift-Stufen. Probleme ergeben sich jedoch beim Kaltstart des Fahrzeugs und im unteren Lastbereich. Beim Kaltstart benötigen die verwendeten Shift-Katalysatoren eine gewisse Zeit, um sich auf ihre Arbeitstemperatur zu erwärmen. Das erfindungsgemäße Verfahren verkürzt diese Aufwärmphase der Katalysatoren durch Zugabe von Sauerstoff zum Reformatgas und teilweises Verbrennen des im Reformatgas enthaltenen Wasserstoffs, beziehungsweise durch Oxidation des Kohlenmonoxids und anderer oxidierbarer Komponenten des Reformatgases. Neben der Verkürzung der Aufwärmphase erlaubt das Verfahren auch die Aufrechterhaltung der Arbeitstemperatur im unteren Lastbereich des Kraftfahrzeugs.

Für die Anwendung im erfindungsgemäßen Verfahren kann der Katalysator zu Tabletten oder Pellets verpresst sein oder als Granulat vorliegen. Er wird dann in Form einer Schüttung eingesetzt. Die schlechte Zugänglichkeit der Reaktanden zu den katalytisch aktiven Zentren im Innern der Formkörper vermindert jedoch die spezifische Konvertierungsrate für Kohlenmonoxid und damit die erzielbare Raum-Zeit-Ausbeute. Dies hat entsprechend negative Auswirkungen auf das Volumen des benötigten Reaktors. Die durch den Fahrbetrieb des Kraftfahrzeugs hervorgerufenen Erschütterungen führen außerdem zu einem ungewollten Abrieb der Formkörper, der die Strömungswege in der Schüttung verstopft und damit den Druckabfall im Reaktor ständig erhöht.

Bevorzugt wird der Katalysator daher in Form einer Beschichtung auf einen inerten Tragkörper aufgebracht. Ein solcher Katalysator wird im folgenden auch als Beschichtungskatalysator bezeichnet. Als Tragkörper eignen sich die aus der Autoabgasreinigung bekannten monolithischen Wabenkörper aus Keramik oder Metall mit Zelldichten (Anzahl der Strömungskanäle pro Querschnittsfläche) von mehr als 10 cm$^{-2}$. Aber auch Metallbleche, Wärmetauscherplatten, offenzellige, keramische oder metallische Schaumkörper und je nach Erfordernis unregelmäßig geformte Bauteile können als Tragkörper eingesetzt werden. Die Dicke der Beschichtung kann je nach Anwendungsfall zwischen 10 und 100 μm variieren.

Ein Tragkörper wird im Rahmen dieser Erfindung als inert bezeichnet, wenn das Material des Tragkörpers nicht oder nur unwesentlich an der katalytischen Umsetzung teilnimmt. In der Regel handelt es sich dabei um Körper mit geringer spezifischer Oberfläche und geringer Porosität.

Für die Herstellung eines für das Verfahren geeigneten Beschichtungskatalysators gibt es verschiedene Möglichkeiten, von denen hier einige erläutert werden.

Zur Herstellung eines erfindungsgemäßen, oxidationsaktiven Edelmetall-Shift-Katalysators auf einem Tragkörper kann das Trägermaterial für die katalytisch aktiven Komponenten in einer wässrigen Lösung von löslichen Edelmetallverbindungen aus der Gruppe Platin, Palladium, Rhodium, Ruthenium, Iridium, Osmium und Gold und weiteren löslichen Verbindungen von Unedelmetallen der Nebengruppen suspendiert werden. Anschließend wird die saure Suspension bei erhöhter Temperatur mit einer Base, wie zum Beispiel Natriumcarbonat, neutralisiert und dann bei gleichbleibender Temperatur mit einem wässrigen Reduktionsmittel (Formaldehyd, Hydrazin) reduziert, filtriert, gewaschen, getrocknet, bei Temperaturen zwischen 300 und 550° C in oxidierender Atmosphäre calciniert und anschließend bei Temperaturen zwischen 300 und 600° C reduziert. Das Katalysatormaterial wird zur Herstellung einer Beschichtungssuspension erneut in Wasser suspendiert. Mit dieser Suspension wird der Tragkörper beschichtet. Hierfür können die aus der Autoabgaskatalyse bekannten Verfahren zur Beschichtung von Tragkörpern eingesetzt werden. Zur Fertigstellung des Beschichtungskatalysators wird die Beschichtung getrocknet; bei Temperaturen zwischen 300 und 600° C calciniert und bei Temperaturen zwischen 300 und 600°C in einem wasserstoffhaltigen Gas reduziert.

Alternativ zu der beschriebenen Methode wird der Tragkörper zunächst nur mit dem Trägermaterial beschichtet, wobei das Trägermaterial Seltenerdoxide und Oxide von Unedelmetallen der Nebengruppen enthalten kann. Die Beschichtung auf dem Tragkörper wird anschließend mit einer Lösung aus mindestens einer löslichen Edelmetallverbindung, löslichen Verbindungen der Seltenen Erden und der Unedelmetalle der Nebengruppen imprägniert. Zur Fertigstellung des Beschichtungskatalysators wird der beschichte Tragkörper getrocknet, bei Temperaturen zwischen 300 und 600° C calciniert und bei Temperaturen zwischen 300 und 600° C in einem wasserstoffhaltigen Gas reduziert.

Eine weitere Variante zur Herstellung eines erfindungsgemäßen Beschichtungskatalysators besteht darin, dass zunächst eine Suspension aus dem Trägermaterial, den löslichen Verbindungen der Edelmetalle und gegebenenfalls den löslichen Verbindungen der Unedelmetalle der Nebengruppen und der Seltenen Erden hergestellt wird. Die gelösten Komponenten der Suspension werden dann durch Zugabe eines basischen Fällungsmittels, wie zum Beispiel Natriumhydroxid, auf dem suspendierten Trägermaterial ausgefällt. Die so hergestellte Suspension wird direkt zur Beschichtung der Tragkörper eingesetzt. Zur Fertigstellung des Beschichtungskatalysators wird der beschichtete Tragkörper getrocknet, bei Temperaturen zwischen 300 und 600° C calciniert und bei Temperaturen zwischen 300 und 600° C in einem wasserstoffhaltigen Gas reduziert.

Die Erfindung wird an Hand der folgenden Beispiele näher erläutert.

**Beispiel 1:**

Ein oxidationsaktiver Edelmetall-Shift-Katalysator (Katalysator A) wurde wie folgt hergestellt:

Ein keramischer Wabenkörper mit 93 Zellen pro Quadratzentimeter und einem Volumen von 0,041 1 wurde durch Tauchen in eine wäßrige Suspension von $\gamma$-Aluminiumoxid (spezifische Oberfläche: 140 $m^2$/g) und zweistündiges Calcinieren bei 600° C mit 7,25 g $\gamma$-Aluminiumoxid beschichtet. Nach der Calcinierung wurde der beschichtete Wabenkörper mit einer Lösung aus $Ce(NO_3)_2 \cdot 6 H_2O$ in Wasser imprägniert und anschließend für zwei Stunden bei 500° C calciniert. Der calcinierte Formkörper wurde dann mit einer Lösung von $Pt(NO_3)_2$, $Pd(NO_3)_2$ und $Fe(NO_3)_3$ imprägniert.

Die katalytisch aktive Beschichtung des so hergestellten Katalysators hatte ein Gesamtgewicht von 5,16 g, entsprechend 126 g pro Liter Volumen des Wabenkörpers. Sie enthielt 1,2 Gew.-% Pt, 1,2 Gew.-% Pd, 2,4 Gew.-% Fe, 35,7 Gew.-% $CeO_2$ und 59,5 Gew.-% $Al_2O_3$.

Der Katalysator wurde unter den Bedingungen einer Hochtemperatur-Konvertierung bei Belastung mit einem synthetischen Reformat geprüft. Es wurde seine $CO_2$-Selektivität $S_{CO_2}$, der CO-Umsatz, sowie die spezifische Konvertierungsrate $R_{CO}$ gemäß Gleichung (4) gemessen. Für die Hochtemperatur-Konvertierung wurde folgende Gaszusammensetzung verwendet: 27,0 Vol.-% $H_2$, 9,0 Vol.-% CO, 9,0 Vol.-% $CO_2$, 18,0 Vol.-% $H_2O$, 37,0 Vol.-% $N_2$. Die Katalysatoren wurden bei einer Raumgeschwindigkeit GHSV = 10000 $h^{-1}$ und einem Druck von 2 bar absolut geprüft.

Die $CO_2$-Selektivität $S_{CO_2}$ der Umsetzung von Kohlenmonoxid wurde mit Hilfe der Partialdrücke des gebildeten Kohlendioxids $p_{CO2}$ und des Methans $p_{CH4}$ berechnet als

$$S_{CO_2} = \frac{p_{CO_2}}{p_{CO_2} + p_{CH_4}} \tag{5}$$

**Tabelle 1:** Hochtemperatur-CO-Konvertierung an Katalysator A.

| T [° C] | $S_{CO_2}$ [%] | CO-Umsatz [%] | $R_{CO}$ $\left[\dfrac{mol}{g_{kat} \cdot s}\right]$ |
|---|---|---|---|
| 300 | 100 | 27 | $3,0 \cdot 10^{-5}$ |
| 350 | 100 | 35 | $4,0 \cdot 10^{-5}$ |
| 400 | 100 | 45 | $4,8 \cdot 10^{-5}$ |

**Vergleichsbeispiel 1:**

Ein kommerzieller Fe/Cr-Katalysator (Katalysator B; Tabletten 5x5 mm) wurde unter den gleichen Bedingungen wie Katalysator A geprüft.

**Tabelle 2:** Hochtemperatur-CO-Konvertierung an Katalysator B.

| T [° C] | $S_{CO_2}$ [%] | CO-Umsatz [%] | $R_{CO}$ $\left[\dfrac{mol}{g_{kat} \cdot s}\right]$ |
|---|---|---|---|
| 300 | 100 | 30 | $2,2 \cdot 10^{-6}$ |
| 350 | 100 | 37 | $2,7 \cdot 10^{-6}$ |
| 400 | 100 | 45 | $3,3 \cdot 10^{-6}$ |

Wie Tabelle 1 und 2 zeigen, weisen beide Katalysatoren vergleichbare CO-Umsätze auf. Der erfindungsgemäße Katalysator A zeigt jedoch aufgrund höherer Aktivität eine zehnfach höhere, spezifischen Konvertierungsrate $R_{CO}$ im Vergleich zum Katalysator B.

**Patentansprüche**

1. Verfahren zur katalytischen Umsetzung von Kohlenmonoxid in einem Wasserstoff und weitere, oxidierbare Bestandteile enthaltenden Gasgemisch mit Wasser zu Kohlendioxid und Wasserstoff (Kohlenmonoxid-Konvertierung) durch Leiten des Gasgemisches über einen Shift-Katalysator, der eine Arbeitstemperatur für die Kohlenmonoxid-Konvertierung besitzt,
**dadurch gekennzeichnet,**
**dass** es sich bei dem Shift-Katalysator um einen oxidationsaktiven Shift-Katalysator auf der Basis von Edelmetallen handelt und die erforderliche Arbeitstemperatur des Katalysators durch teilweise Oxidation der oxidierbaren Bestandteile des Gasgemisches eingestellt und gegebenenfalls aufrecht erhalten wird.

2. Verfahren nach Anspruch 1,
**dadurch gekennzeichnet,**
**dass** der oxidationsaktive Shift-Katalysator wenigstens eines der Edelmetalle Platin, Palladium, Rhodium, Ruthenium, Iridium, Osmium und Gold auf einem oxidischen Trägermaterial aus der Gruppe Aluminiumoxid, Siliciumdioxid, Titanoxid, Seltenerdoxide oder Mischoxide hiervon oder Zeolithe enthält.

3. Verfahren nach Anspruch 2,
**dadurch gekennzeichnet,**
**dass** der Shift-Katalysator als weitere katalytisch aktive Komponenten wenigstens ein Seltenerdmetall enthält.

4. Verfahren nach Anspruch 2 oder 3,
**dadurch gekennzeichnet,**
**dass** der Shift-Katalysator als weitere katalytisch aktive Komponenten wenigstens ein Unedelmetall der Nebengruppen des periodischen Systems der Elemente enthält.

5. Verfahren nach Anspruch 4,
**dadurch gekennzeichnet,**
**dass** das oxidische Trägermaterial mit redoxaktiven Oxiden der Metalle Cer, Zirkon, Titan, Vanadium, Mangan und Eisen in einer Menge von 1 bis 50 Gew.-%, bezogen auf das Gesamtgewicht des Trägermaterials, dotiert ist.

6. Verfahren nach Anspruch 5,
**dadurch gekennzeichnet,**
**dass** der Edelmetall-Shift-Katalysator Platin und/oder Palladium gemeinsam mit Eisen oder Kupfer sowie Ceroxid auf einem feinteiligen Aluminiumoxid enthält.

**7.** Verfahren nach Anspruch 1,
**dadurch gekennzeichnet,**
**dass** der für die teilweise Oxidation benötigte Sauerstoff im Gasgemisch enthalten ist.

**8.** Verfahren nach Anspruch 1,
**dadurch gekennzeichnet,**
**dass** der für die teilweise Oxidation benötigte Sauerstoff dem Gasgemisch vor dem Kontakt mit dem Katalysator in Abhängigkeit von den herrschenden Verfahrensparametern zugefügt wird.

**9.** Verfahren nach Anspruch 8,
**dadurch gekennzeichnet,**
**dass** das Gasgemisch mit einer Raumgeschwindigkeit zwischen einer Leerlauf-Raumgeschwindigkeit und 100000 $h^{-1}$ und bei einem Druck zwischen Atmosphärendruck und 10 bar über den Katalysator geleitet wird.

**10.** Verfahren nach Anspruch 9,
**dadurch gekennzeichnet,**
**dass** die Arbeitstemperatur des oxidationsaktiven Edelmetall-Shift-Katalysators zwischen 180 und 300° C liegt.

**11.** Verfahren nach Anspruch 10,
**dadurch gekennzeichnet,**
**dass** das Gasgemisch 2 bis 15 Vol.-% Kohlenmonoxid enthält.

**12.** Verfahren nach Anspruch 9,
**dadurch gekennzeichnet,**
**dass** die Arbeitstemperatur des oxidationsaktiven Edelmetall-Shift-Katalysators zwischen 280 und 550° C liegt.

**13.** Verfahren nach Anspruch 12,
**dadurch gekennzeichnet,**
**dass** dem oxidationsaktiven Edelmetall-Shift-Katalysator mit einer Arbeitstemperatur zwischen 280 und 550° C ein weiterer oxidationsaktiver Edelmetall-Shift-Katalysator mit einer Arbeitstemperatur zwischen 180 und 300° C nachgeschaltet ist und dass das Gasgemisch vor dem Kontakt mit dem weiteren Katalysator auf dessen Arbeitstemperatur abgekühlt wird.

**14.** Verfahren nach Anspruch 12 oder 13,
**dadurch gekennzeichnet,**
**dass** das Gasgemisch 2 bis 40 Vol.-% Kohlenmonoxid enthält.

**15.** Verfahren nach Anspruch 1,
**dadurch gekennzeichnet,**
**dass** der Katalysator zu Tabletten oder Pellets verpresst ist.

**16.** Verfahren nach Anspruch 1,
**dadurch gekennzeichnet,**
**dass** der Katalysator in Form einer Beschichtung auf einem inerten Tragkörper aufgebracht ist.

**17.** Verfahren nach Anspruch 16,
**dadurch gekennzeichnet,**
**dass** als inerte Tragkörper monolithische Wabenkörper aus Keramik oder Metall, offenzellige, keramische oder metallische Schaumkörper, Metallbleche, Wärmetauscherplatten oder unregelmäßig geformte Bauteile eingesetzt werden.

**18.** Verfahren nach Anspruch 17,
**dadurch gekennzeichnet,**
**dass** der Shift-Katalysator Platin und/oder Palladium gemeinsam mit Eisen oder Kupfer sowie Ceroxid auf einem feinteiligen Aluminiumoxid enthält, wobei der Katalysator in Form einer Beschichtung auf einem monolithischen Wabenkörper aus Keramik oder Metall aufgebracht ist.

**19.** Katalysator für die Umsetzung von Kohlenmonoxid in einem Wasserstoff und weitere, oxidierbare Bestandteile enthaltenden Gasgemisch mit Wasser zu Kohlendioxid und Wasserstoff,
**dadurch gekennzeichnet,**
**dass** er Platin und/oder Palladium gemeinsam mit Eisen oder Kupfer sowie Ceroxid auf einem feinteiligen Aluminiumoxid enthält, wobei der Katalysator in Form einer Beschichtung auf monolithische Wabenkörper aus Keramik oder Metall, offenzellige, keramische oder metallische Schaumkörper, Metallbleche, Wärmetauscherplatten oder unregelmäßig geformte Bauteile aufgebracht ist.